# EUROPÄISCHE PATENTANMELDUNG

(11) **EP 0 581 090 A2**
(43) Veröffentlichungstag der Anmeldung: **02.02.1994**
(21) Anmeldenummer: 93111077.9
(22) Anmeldetag: 10.07.1993
(51) Int. Cl.: B09B 3/00

(54) **Verfahren zum Behandeln von Metallschlämmen**

(30) Priorität: 29.07.1992 DE 4225035; 20.10.1992 DE 4235293
(71) Anmelder: Dipl.-Ing. SF-Ing. MANFRED BAHNEMANN RECYCLING-SYSTEME GmbH, D-78259 Mühlhausen-Ehingen (DE)
(72) Erfinder: Muther, Christof, CH-6030 Ebikon (CH); Bahnemann, Manfred, D-78259 Mühlausen/Ehingen (DE)
(74) Vertreter: Weiss, Peter, Dr. rer. nat.

(57) **Zusammenfassung**

Bei einem Verfahren zum Behandeln von Produktionsrückständen, insbesondere zur Entsorgung und/oder Rückgewinnung von Wertstoffen, wird dem Produktionsrückstand Flüssigkeit (Destillat) entzogen. Dabei wird der Produktionsrückstand mechanisch aufgeschlossen und mit Zuluft beaufschlagt.

## Beschreibung

Die Erfindung betrifft ein Verfahren zum Behandeln von Produktionsrückständen, insbesondere zur Entsorgung und/oder Rückgewinnung von Wertstoffen, wobei dem Produktionsrückstand Flüssigkeit (Destillat) entzogen wird.

Produktionsrückstände, wie beispielsweise Glas, Kerami-, Klär- und Metallschlämme fallen heute bei sehr vielen industriellen Verfahren an und stellen bezüglich ihrer Entsorgung ein erhebliches Problem dar. Vor allen aber auch bei der Entsorgung von Schrott sowie bei Abwasserbehandlungen in der Galvano- bzw. Oberflächenveredelungsindustrie, wie beispielsweise Elektronikschrott, Bildröhren od. dgl. fallen Produktionsrückstände an, die zum einen noch erhebliche rückgewinnbare Wertstoffe enthalten, die aber andererseits auch nicht einfach deponiert werden können.

Hauptproblem der Produktionsrückstände ist ausser dem Verlust der Wertstoffe ihr erhebliches Volumen und Gewicht, wodurch die Entsorgung wesentlch verteuert wird. Zur Volumenreduktion werden deshalb heute Produktionsrückstände so behandelt, dass ihnen Flüssigkeit entzogen wird. Dies geschieht einmal in einem Verdampfer, der jedoch sehr viel Energie benötigt. Um ferner eine ausreichende Volumenreduktion, d.h. ein ausreichendes Verdampfen zu erzielen, müssen die Metallschlämme in dem Verdampfer über einen längeren Zeitraum verweilen. Dies bringt weitere Probleme mit sich.

Bekannt ist auch ein Zentrifugieren der Metallschlämme, wobei jedoch hier der Feststoffanteil nur bei 30 % liegen darf, um das Verfahren wirkungsvoll auszugestalten. Auch bei einem Behandeln der Metallschlämme innerhalb einer Filterkammerpresse verbleiben noch genügend Anteile an Flüssigkeit, was eine weitere Entsorgung wesentlich verteuert.

Der vorliegenden Erfindung liegt die Aufgabe zugrunde, einen Produktionsrückstand sowohl gewichtsmässig als auch volumenmässig weitgehendst auf ein Minimum zu reduzieren, um somit seine Entsorgung wesentlich zu vereinfachen.

Zur Lösung dieser Aufgabe führt, dass der Produktionsrückstand mechanisch aufgeschlossen und mit Zuluft beaufschlagt wird.

Ein Problem der bekannten Produktionsrückstände, insbesondere Metallschlämme liegt vor allem darin, dass der darin enthaltene Feststoffanteil zu grob ist, so dass er zuviel Flüssigkeit behält. Wird er beispielsweise mit Wärme beaufschlagt, so dringt die Wärme nur langsam von aussen nach innen in den Kern des Feststoffpartikels ein, so dass das Verdampfen von aussen nach innen sich erheblich verlangsamt. Wird dagegen der Produktionsrückstand mechanisch aufgeschlossen, so verkleinert sich das Korn. Damit kann die Flüssigkeit besser aus dem Produktionsrückstand ausdringen.

Das mechanische Aufschliessen soll bevorzugt soweit gehen, dass die Feststoffpartikel innerhalb des Metallschlammes pulverisiert werden. Dies geschieht beispielsweise in einer Mikrowirbelmühle, in welcher der Metallschlamm behandelt wird. Beim Pulverisieren erhöht sich die Oberfläche des Feststoffanteiles, so dass die vorhandene Flüssigkeit, nämlich in der Regel Wasser, erheblich besser ausdringen kann. Ferner hat der mechanische Aufschluss, d.h. insbesondere das Pulverisieren, den Vorteil, dass durch die Reibung erheblich Wärme erzeugt wird, die bereits zu einem Ausdampfen der Flüssigkeit führt. Wird dann noch das Konzentrat mit vorgewärmterZuluft beaufschlagt, so wird zum einen das Verdampfen weiter unterstützt, zum anderen wird aber auch der Flüssigkeitsdampf sofort ausgetragen, so dass er keine Möglichkeit zur Kondensierung innerhalb der Mikrowirbelmühle hat.

In einem bevorzugten Ausführungsbeispiel der Erfindung soll dem neuen Verfahren noch ein bekanntes Verfahren der Behandlung des Produktionsrückstandes mittels eines Verdampfers, einer Zentrifuge oder ein Filterkammerpresse vorgeschaltet sein. Allerdings genügt hier eine relativ schnelle Behandlung, die weniger Energie und Zeit benötigt, da der eigentliche Flüssigkeitsentzug nach dem oder während des mechanischen Aufschlusses stattfindet.

Das so aus der Mikrowirbelmühle gewonnene Konzentrat ist sowohl bezüglich seines Gewichtes als auch seines Volumens erheblich reduziert. Eine weitere Reduktion und insbesondere eine Wertstoffrückgewinnung kann nun durch eine Metallabscheidung erfolgen. Hierzu sind verschiedene Verfahren denkbar. Bevorzugt erfolgt die Behandlung des Konzentrates in einer Elektrolysezelle.

Als letzter Schritt, der sowohl an die Behandlung in der Mikrowirbelmühle als auch an die Behandlung in der Elektrolysezelle anschliessen kann, ist an ein Brikettieren gedacht, d.h. an ein Pressen innerhalb einer entsprechenden Pressanlage. Hierdurch erfolgt nochmals eine Volumenreduktion. Was jetzt übrig bleibt, wird einer weiteren Verwertung/Deponierung zugeführt.

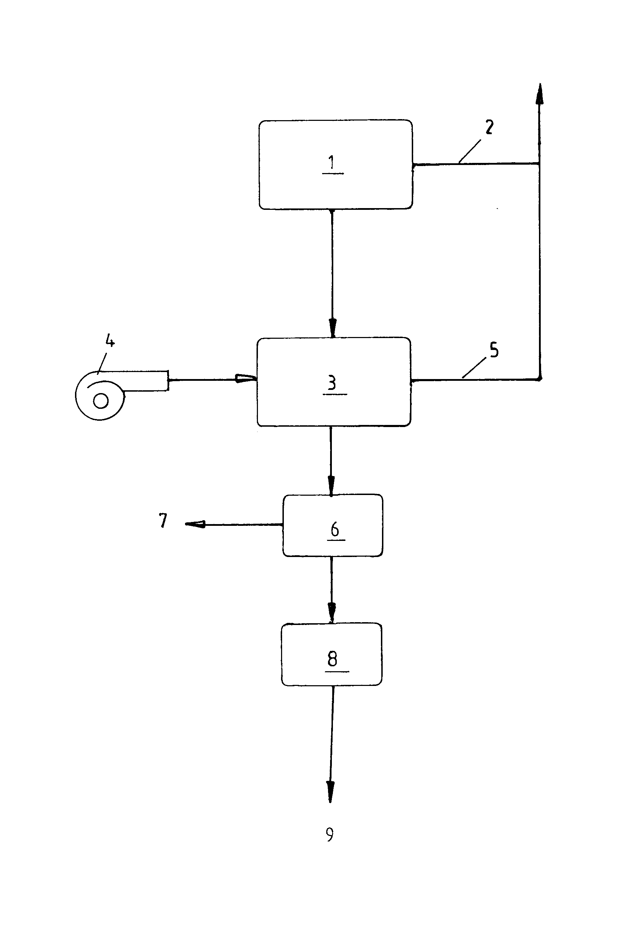

Weitere Vorteile, Merkmale und Einzelheitn der Erfindung ergeben sich aus der nachfolgenden Beschreibung eines bevorzugten Ausführungsbeispiels sowie anhand der Zeichnung; diese in ihrer einzigen Figur eine blockbildliche Darstellung eines erfindungsgemässen Verfahrens zum Behandeln von Produktionsrückständen.

Beispielsweise ein zu behandelnder Metallschlamm besteht üblicherweise aus Metallfeststoffen und einem hohen Prozentsatz an Flüssigkeit, in der Regel Wasser. Dieser Metallschlamm wird in einem bevorzugten Ausführungsbeispiel der Erfindung beispielsweise in eine Filterkammerpresse 1 eingegeben. Anstelle der Filterkammerpresse kann selbstverständlich auch ein Verdampfer, eine Zentrifuge od. dgl. Anwendung finden.

In der Filterkammerpresse 1 erfolgt durch Druckbeaufschlagung ein Auspressen des Metallschlamms, wobei Flüssigkeit durch einen Austrag 2 beispielsweise wieder in einen Reinigungskreislauf zurückgegeben werden kann. Diese Flüssigkeit ist somit ein erstes Destillat, während ein erstes Konzentrat aus dem Metallschlamm, welches jedoch noch etwa 50 % Flüssigkeit beinhaltet, als pasteuse Masse in eine Mikrowirbelmühle 3 eingegeben wird. In dieser Mikrowirbelmühle wird die pasteuse Masse pulverisiert, wodurch sich die Oberfläche der Metallpartikel erhöht und die in dem Metallschlamm vorhandene Flüssigkeit besser ausdringen kann. Ferner wird durch die Pulverisierung, d.h. Reibung, Wärme erzeugt, welche zu einem Verdampfen der Flüssigkeit führt.

Zusätzlich wird in die Mikrowirbelmühle 3 Zuluft von einem Gebläse 4 eingebracht, wobei diese Zuluft bevorzugt noch erwärmt ist. Diese Zuluft unterstützt nicht nur die Verdampfung der Flüssigkeit, sondern führt auch den Wasserdampf weg, so dass keine Möglichkeit der Kondensierung des Wasserdampfes innerhalb der Mikrowirbelmühle entsteht. Die Abluft, welche über dem Taupunkt liegt, gelangt über eine Leitung 5 gegebenenfalls zusammen mit der Flüssigkeit aus dem Austrag 2 in einen nicht näher gezeigten Reinigungskreislauf.

Aus der Mikrowirbelmühle 3 kommt nun ein Konzentrat, welches weniger als 10 % Flüssigkeit beinhaltet. Dieses Konzentrat gelangt bevorzugt in eine Elektrolysezelle 6, in welcher es elektrolytisch behandelt wird. Hierbei kommt es zu einem Abscheiden von Metallen, die dann einer Wiederverwertung 7 zugeführt werden.

Was dann noch letztendlich übrig bleibt, ist im wesentlichen ein Konzentrat, welches noch bevorzugt in einer Anlage 8 zum Brikettieren weiterbehandelt wird. Hierdurch wird das Volumen des Konzentrats nochmals um zwei Drittel verringert und schlussendlich einer Deponie 9 zugeführt.

Insgesamt wird durch das erfindungsgemässe Verfahren das Gewicht des Metallschlammes um drei Viertel gegenüber demjenigen, was aus der Filterkammerpresse 1 kommt, reduziert.

## Patentansprüche

1. Verfahren zum Behandeln von Produktionsrückständen, insbesondere zur Entsorgung und/oder Rückgewinnung von Wertstoffen, wobei dem Produktionsrückstand Flüssigkeit (Destillat) entzogen wird,
dadurch gekennzeichnet,
dass der Produktionsrückstand mechanisch aufgeschlossen und mit Zuluft beaufschlagt wird.

2. Verfahren nach Anspruch 1, dadurch gekennzeichnet, dass der Produktionsrückstand beispielsweise in einer Mikrowirbelmühle pulverisiert wird.

3. Verfahren nach Anspruch 1 oder 2, dadurch gekennzeichnet, dass die Zuluft vorgewärmt wird.

4. Verfahren nach einem der Anbsprüche 1 - 3, dadurch gekennzeichnet, dass durch den mechanischen Aufschluss in dem Produktionsrückstand Wärme erzeugt wird, wodurch die Flüssigkeit zumindest teilweise verdampft, und der Dampf dann durch die Zuluft abtransportiert wird.

5. Verfahren nach wenigstens einem derAnsprüche 1 - 4, dadurch gekennzeichnet, dass dem mechanischen Aufschluss ein an sich bekanntes Verfahren zum Entzug von Flüssigkeit, wie beispielsweise ein Verdampfen, Zentrifugieren, Auspressen, vorgeschaltet ist.

6. Verfahren nach wenigstens einem der Ansprüch 1 - 5, dadurch gekennzeichnet, dass aus einem Restkonzentrat des Produktionsrückstandes nach dem mechanischen Aufschluss und der Behandlung mit Zuluft Metalle abgeschieden werden.

7. Verfahren nach Anspruch 6, dadurch gekennzeichnet, dass die Abscheidung der Metalle aus dem Konzentrat auf elektrolytischem Wege erfolgt.

8. Verfahren nach wenigstens einem derAnsprüche 1 - 7, dadurch gekennzeichnet, dass ein Restkonzentrat des Produktionsrückstandes nach dem mechanischen Aufschluss und der Behandlung mit Zuluft und gegebenenfalls nach einem Abscheiden von Metallen brikettiert wird.
